# EUROPÄISCHE PATENTSCHRIFT

(11) **EP 0 476 507 B1**
(45) Veröffentlichungstag und Bekanntmachung des Hinweises auf die Patenterteilung: **15.03.1995**
(21) Anmeldenummer: 91115386.4
(22) Anmeldetag: 11.09.1991
(51) Int. Cl.: C08B 11/193, C09D 5/02, C09D 7/12

(54) **Modifizierte Celluloseether und ihre Verwendung in Dispersionsfarben**
Modified cellulose ethers and their use in dispersion paints
Ether de cellulose modifié et son utilisation dans des peintures en dispersion

(30) Priorität: 11.09.1990 DE 4028746
(43) Veröffentlichungstag der Anmeldung: 25.03.1992
(73) Patentinhaber: HOECHST AKTIENGESELLSCHAFT, 65926 Frankfurt am Main (DE)
(72) Erfinder: Meister, Christoph, Dr., W-6200 Wiesbaden (DE); Dönges, Reinhard, Dr., W-6232 Bad Soden am Taunus (DE); Schermann, Walter, Dr., D-6500 Mainz (DE); Schrattenholz, Walter, D-6548 Schnorbach (DE)

(56) Entgegenhaltungen:
- EP-A- 0 307 915
- BE-A- 699 299
- CHEMICAL PATENTS INDEX, BASIC ABSTRACTS JOURNAL Section Ch, Week 8637, 5. November 1986 Derwent Publications Ltd., London, GB; Class A, AN 86-242445/37 & JP-A-61 171 702 (DAICEL CHEM IND KK)2 August 1986.

## Beschreibung

Die Erfindung bezieht sich auf wasserlösliche Celluloseether, auf ihre Verwendung und auf Dispersionsfarbe, welche diese Verbindung enthält.

Bei Einsatz kommerzieller, mit langkettigen Alkylgruppen hydrophob modifizierter Celluloseether als Verdicker in Dispersionsfarben kommt es bei der Lagerung zu unerwünscht hoher Nachverdickung. Die Konsistenz der Dispersionfarbe steigt nach ihrer Herstellung stark an und kann nach einem Tag Lagerzeit mehr als den doppelten Wert erreichen. Hierdurch wird eine gezielte Einstellung/Überwachung der Farbenkonsistenz beim Farbenhersteller erschwert. Ein weiterer Nachteil dieser mit langkettigen Alkylgruppen hydrophob modifizierten Celluloseether zeigt sich darin, daß die mit diesen Produkten verdickten Dispersionsfarben erst bei relativ hoher Farbenkonsistenz von mindestens 25000-32000 mPa·s (Brookfield-Rheometer, Spindel 6 bei 10 UpM) bei der Verarbeitung deutlich weniger spritzen als die mit nicht-hydrophob modifizierten Celluloseethern hergestellten Farben. Hohe Farbenviskositäten wirken sich andererseits nachteilig bezüglich Verstreichbarkeit und Verlauf der Farben aus.

Aufgabe der Erfindung ist die Schaffung von wasserlöslichen, hydrophob modifizierten Cellulosederivaten, die bei Einsatz in Dispersionsfarben nur eine geringe, mit nicht-hydrophob modifizierten Celluloseethern vergleichbare Nachverdickung der Farben bewirken und gleichzeitig deren Spritzverhalten bei Auftrag der Farbe mit der Rolle in einem Ausmaß verbessern wie es erst bei den kommerziellen mit langkettigen Alkylgruppen hydrophob modifizierten Celluloseethern erreicht wird. Die Erfindung soll außerdem Cellulosederivate bereitstellen, die bei Einsatz in Dispersionsfarben deren Spritzverhalten schon bei relativ niedrigen Farbenviskositäten wesentlich verbessern, wobei sich die Farbe anderseits gut verstreichen lassen muß.

Aus BE-A-0 699 299 sind Cellulosederivate mit fluorhaltigen Substituenten, deren Fluorgehalt 0,1 bis 10 Gew.-% beträgt bekannt. Bei den beschriebenen Verbindungen handelt es sich um wasserlösliche Verbindungen, die einen nicht fluorhaltigen Rest und einen über eine Esterbindung verknüpften fluorhaltigen Rest haben.

Diese Aufgabe wird erfindungsgemäß gelöst durch den Celluloseether mit den im Anspruch 1 genannten Merkmalen und durch die Dispersionsfarbe mit den in Anspruch 5 genannten Merkmalen. Die abhängigen Ansprüche geben Zweckmäßige Weiterbildungen an.

Gegenstand der Erfindung ist ferner die Verwendung des Celluloseethers nach Anspruch 7.

Das molekulare Grundgerüst des Cellulosederivats besteht aus dem bekannten linearen Polymerisat von Anhydroglucose-Einheiten. Die Anzahl der pro Anhydroglucose-Einheit durch den nicht-hydrophoben Substituenten veretherten OH-Gruppen wird durch den durchschnittlichen Substitutionsgrad ausgedrückt, die Anzahl der pro Anhydroglucose-Einheit addierten Einheiten des nicht-hydrophoben Veretherungsmittels durch den molaren Substitutionsgrad. Die Substitutionsgrade liegen bei der Verbindung der Erfindung im üblichen Bereich von Celluloseethern. Der molare Substitutionsgrad beträgt beispielsweise für die Hydroxyethylgruppe in Hydroxyethylcellulose 1,5 bis 4,0, insbesondere 2,0 bis 3,0. Die Menge der nicht-hydrophoben Substituenten ist unkritisch, solange sie ausreicht, um die gewünschte Wasserlöslichkeit des Cellulosederivats zu gewährleisten.

Die erfindungsgemäßen Cellulosederivate sind wasserlösliche Celluloseether mit nicht-hydrophoben Substituenten und zusätzlich hydrophoben Substituenten, der über eine Ether- oder Urethanbindung mit dem Cellulosemolekül verknüpft ist und der eine fluorhaltige, verzweigte oder unverzweigte Alkylkette von 3 - 24, insbesondere 5 - 18 C-Atomen enthält. In dem fluorhaltigen Substituenten sind vorzugsweise mindestens 2, insbesondere mindestens 3 C-Atome mit Fluoratomen verbunden.

Die Menge dieser hydrophoben Substituenten ist vergleichsweise gering und entspricht einem Fluorgehalt im Bereich von 0,05-5, bevorzugt 0,1-1 Gew.-%, bezogen auf das Trockengewicht des Cellulosederivats. Der Fluorgehalt wird auf folgende Weise ermittelt: Das Produkt wird mit einem wäßrig organischen und anschließend mit einem organischen Extraktionsmittel vollständig von Salzen und eventuell adsorptiv gebundenen fluorhaltigen Verunreinigungen befreit und bei 110 °C/10 Stunden getrocknet. Die Probe wird nach der Methode Schöniger verbrannt, die entstandene Flußsäure in Wasser absorbiert und mit einer ionenselektiven Elektrode analysiert (Lit.: W. Schöniger, Mikrochim. Acta (1955/1, 123ff).

Außer dem bzw. den fluorhaltigen Substituenten enthalten die Cellulosederivate einen oder mehrere nicht-hydrophobe Substituenten mit einem über eine Etherbindung mit der Cellulose gebundenen nichtfluorhaltigen Rest aus der Gruppe Hydroxyethyl, Hydroxypropyl, Methyl, Ethyl und Carboxymethyl. Die Menge dieser nicht-hydrophoben Substituenten wird so eingestellt, daß je nach Verwendungszweck eine ausreichende Wasserlöslichkeit des Cellulosederivats sichergestellt ist. Ausreichend wasserlösliche Cellulosederivate zeigen eine Löslichkeit von mindestens 0,5 Gew.-%, in Wasser (20 °C).

Der bevorzugte Rest des nichtfluorhaltigen nicht-hydrophoben Substituenten ist Hydroxyethyl. Der durchschnittliche Polymerisationsgrad der erfindungsgemäßen Celluloseetherderivate liegt bei etwa 50-2000, insbesondere bei 400-1200.

Im Gegensatz zu den bisher in Dispersionsfarben verwendeten, mit langkettigen nichtfluorhaltigen Alkylgruppen hydrophob modifizierten Celluloseethern zeigen die 1-2 %igen wäßrigen Lösungen der erfindungsgemäßen Celluloseetherderivate wegen ihres geringen Anteils an hydrophoben fluorhaltigen Substituenten praktisch keine assoziative Verdickung. Sie verhalten sich in wäßriger Lösung wie entsprechende nicht-modifizierte Celluloseether.

Die modifizierten fluorhaltigen Alkylreste können an das Cellulosesubstrat über eine Ether- oder Urethanbindung gebunden sein. Die Etherbindung ist bevorzugt, denn diese ist gewöhnlich am beständigsten gegenüber weiteren Reaktionen, z.B. der hydrolytischen Abspaltung vom Cellulosegrundgerüst.

Verfahren zur Herstellung gemischter fluorfreier Celluloseether, d.h. von Produkten mit mehr als einem modifizierenden, verethernden, nichtfluorhaltigen Rest am selben Cellulosemolekül sind auf dem Fachgebiet bekannt. Die Herstellung der Cellulosederivate der Erfindung erfolgt analog der für gemischte, nichtfluorhaltige Celluloseether beschriebenen Arbeitsweise oder durch Kombination entsprechender Verfahren zur Herstellung von Celluloseethern mit nicht-hydrophoben Resten mit der bekannten Herstellung von Cellulosederivaten mit ausschließlich fluorhaltigen Substituenten.

Die Einführung der fluorhaltigen Substituenten kann demzufolge entweder vor, nach oder gleichzeitig mit der Einführung von Hydroxyethyl-, Hydroxypropyl-, Methyl-, Ethyl- und/oder Carboxymethylethergruppen erfolgen. Bevorzugt wird nach bekannten Verfahren zunächst ein nichtfluorhaltiger Celluloseether aus der Gruppe Hydroxyethyl-, Hydroxypropyl-, Methyl-, Ethyl- oder Carboxymethylcellulose oder einer ihrer Mischether hergestellt. Diesen setzt man anschließend entweder mit oder ohne Zwischenisolierung in Gegenwart von Basen wie z.B. wäßrigen Alkalimetallhydroxiden, wäßrigen Erdalkalimetallhydroxiden, quatären Ammoniumhydroxiden oder tertiären Aminen wie z.B. Pyridin, Triethyl- oder Tripropylamin mit den fluorhaltigen Reagenzien um. Die Basen dienen sowohl als Katalysator für die Umsetzung mit dem fluorhaltigen Reagenz als auch als Quellmittel für das Cellulosesubstrat. Hierdurch wird gewährleistet, daß die fluorhaltigen Reagenzien mit praktisch allen Celluloseethermolekülen gleichzeitig reagieren. Bevorzugt wird die Umsetzung in einem inerten Verdünnungsmittel durchgeführt. Als solche eignen sich beispielsweise niedere Alkohole, wie Isopropanol und t-Butanol, Ketone wie Aceton, aromatische bzw. aliphatische Kohlenwasserstoffe, wie z.B. Toluol oder das im Überschuß eingesetzte fluorhaltige Reagenz selbst. Die Umsetzung erfolgt gewöhnlich im Temperaturbereich von 20 bis 100 °C. Nach beendeter Umsetzung wird die restliche Base neutralisiert, das Produkt gewonnen, gegebenenfalls mit wäßrig organischen und/oder organischen Lösungsmitteln gewaschen und abschließend getrocknet. Im Endprodukt liegen die Cellulosederivate als Granulat oder als Pulver vor und zeigen gewöhnlich Restfeuchten von unter 10 %.

Geeignete fluorhaltige Reagenzien zur Bildung einer Etherbindung zwischen der Cellulose und dem fluorhaltigen Substituenten sind beispielsweise Alkylenoxide mit einem Fluoralkylrest, Fluorolefine, fluorhaltige Halogenalkane, fluorhaltige Halogenhydrine, Glycidether von Fluoralkoholen sowie Michael-Systeme wie fluorhaltige Acrylnitril- und Acrylesterderivate.

Alkylenoxide mit einem Fluoralkylrest zur Bildung einer Etherbindung zeigen die Formel 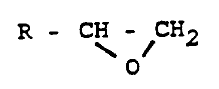
in der R ein Alkylrest mit 3 bis 22, insbesondere 3 bis 16 C-Atomen ist, wobei mindestens 3 C-Atome fluoriert sind.

Diese Verbindungen reagieren zu Cellulosederivaten der Formel

(a) R - CH(OH) - CH₂ - O - Celluloseether .

Fluorhaltige Halogenhydrine besitzen die Formel

R - CH(OH) - CH₂Cl(Br) ,

in der R die gleiche Bedeutung hat. Sie reagieren in Gegenwart von Basen unter HCl- bzw. HBr-Abspaltung zum Alkylenoxid und dieses in gleicher Weise wie oben beschrieben zum Cellulosederivat.

Fluorolefine sind fluorhaltige Kohlenwasserstoffe

R - CF = CF - R¹

mit insgesamt 3-24, insbesondere 5-18 C-Atomen und wenigstens einer Doppelbindung, wobei zumindest die C-Atome an einer Doppelbindung und ein drittes C-Atom fluoriert sind. R und R¹ sind Alkylreste.

Man erhält Cellulosederivate der Formel

(b) Celluloseether - O - CFR - CHFR¹ bzw.

(c) Celluloseether - O - CFR¹ - CHFR .

Fluorhaltige Halogenalkane bestehen aus gesättigten Kohlenwasserstoffen RX mit mindestens 3 fluorierten C-Atomen im Alkylrest R und einem C-Atom mit einem Chlor-, Brom- oder Jodatom (=X). Die Gesamtzahl der C-Atome beträgt 3 bis 24, insbesondere 5 bis 18. Das Cellulosederivat hat die Formel

(d) Celluloseether - O - R .

Glycidether von Fluoralkoholen besitzen die Formel 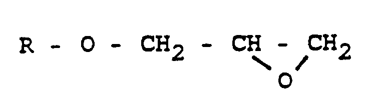
in der R ein Alkylrest mit 3 bis 21, insbesondere 3 bis 15 C-Atomen ist. Die Verbindung enthält mindestens 3 fluorierte C-Atome. Das resultierende Cellulosederivat hat die Formel

(e) Celluloseether - O - CH₂ - CH(OH) - CH₂ - OR .

Fluorhaltige Acrylnitrile und Acrylester zeigen die Formeln

CX₂ = CX - Y

R²CX = CX - Y

in denen X Wasserstoff und/oder Fluor bedeutet. R² ist entweder H oder ein Alkylrest mit 1 bis 22, insbesondere 3 bis 16 C-Atomen, Y ist -CN oder -CO₂R³, wobei R³ eine Alkylgruppe mit 1 bis 22, insbesondere 3 bis 16 C-Atomen bedeutet.
Diese Verbindungen enthalten mindestens 3 fluorhaltige C-Atome.

Sie reagieren zu

(f) Celluloseether - O - CX₂ - CHX - Y bzw.

(g) Celluloseether - O - CXR² - CHX - Y .

Die Einführung der fluorhaltigen Reste in Cellulose oder Celluloseether über eine Etherbindung der fluorierten Gruppe erfolgt unter analogen Reaktionsbedingungen wie bei der bekannten Herstellung von Celluloseethern mit verschiedenen nichtfluorhaltigen Resten. Hierbei geht man von Cellulose bzw. von Zellstoff aus und führt den nichtfluorhaltigen Rest und den fluorhaltigen Rest durch Reaktion mit einer Hydroxylgruppe der Cellulose im basischen Madium nacheinander oder gleichzeitig ein.

Bei der Einführung von fluorhaltigen Substituenten über eine Urethanbindung werden praktisch die gleichen Verfahren angewendet wie bei der Bildung einer Etherbindung mit den fluorhaltigen Reagenzien. Geeignete fluorhaltige Reagenzien zur Bildung einer Urethanbindung sind z.B. fluorhaltige Isocyanate.

Fluorhaltige Isocyanate besitzen die Formel

R - N = C = O ,

in der R eine fluorierte Alkylgrupe mit 3 bis 24, insbesondere 5 bis 18 C-Atomen bedeutet, wobei mindestens 2 vorzugsweise mindestens 3 C-Atome fluoriert sind.

Sie reagieren zu

(1) R - NH - CO - O - Celluloseether .

Wesentlich für die Umsetzung dieser fluorhaltigen Reagenzien mit Cellulose oder Celluloseethern zur Bildung einer Urethanbindung ist - wie bei der Bildung einer Etherbindung - die Anwesenheit von Basen. Die Basen gewährleisten eine hinreichende Quellung der Cellulose oder der Celluloseether vor der Reaktion mit dem fluorhaltigen Reagenz, so daß die modifizierenden fluorhaltigen Reagenzien mit allen Cellulose- oder Celluloseethermolekülen praktisch gleichförmig reagieren können. Wenn die Reaktion nicht weitgehend gleichförmig erfolgt, wird die angestrebte Verbesserung der Gebrauchseigenschaften nicht erzielt.

Geeignete Reaktionsapparate zur Herstellung der erfindungsgemäßen Celluloseetherderivate sind beispielsweise Rührkessel, Mischer und Kneter. Grundsätzlich können alle Reaktionsapparate verwendet werden, die auch bei der Herstellung von Cellulosederivaten mit nicht-hydrophoben Substituenten üblich sind und eine ausreichende Durchmischung der Cellulose oder des wasserlöslichen Celluloseethers mit den nicht-hydrophoben Reagenzien gestattet.

Die Erfindung wird durch die nachfolgenden Beispiele näher erläutert. Alle Prozentangaben beziehen sich auf Gewichtsprozent. Es werden die folgenden fluorhaltigen Reagenzien eingesetzt:
(1) 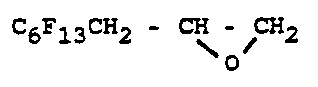
(2) 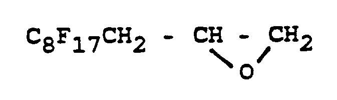
(3) 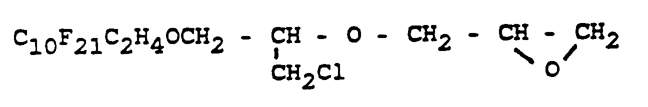
(4) C₇F₁₅CH₂Br
(5) CF₃ - CF = CF₂
(6) C₅F₁₁ - CF = CF₂

### Beispiel 1

60 g lufttrockener Fichtenzellstoff werden in einer Mischung von 586,4 g 95 %-igem t-Butanol und 60 g Isopropanol suspendiert. Man überführt die Suspension in einen 2 l-Autoklaven, inertisiert durch Evakuieren und Überlagern mit Stickstoff und tropft beim Rühren eine Lösung von 15,35 g Natronlauge in 45 g Wasser zu. Nachdem noch 30 min bei Raumtemperatur gerührt worden ist, werden zur Herstellung von Hydroxyethylcellulose 94,6 ml Ethylenoxid zugegeben. Anschließend wird 2 h bei 40 °C umgesetzt, mit 30,43 g 65 %-iger Salpetersäure teilneutralisiert und die Umsetzung innerhalb von 2 h bei 80 °C vervollständigt. Man gibt 0,8 g Alkylenoxid der Formel (1) zu und setzt weitere 6 h bei 90 °C um. Nach dem Abkühlen wird mit 4,6 g Essigsäure neutralisiert, mit 80 %-igem Aceton salzfrei extrahiert, mit 1 l Aceton entwässert, zweimal mit je 1 l Benzin gewaschen und das Produkt bei 60 °C getrocknet.

Das Hydroxyethylcellulosoderivat besitzt einen molaren Substitutionsgrad von 4,0 und einen Fluorgehalt von 0,09 %. Seine Viskosität in 2 %-iger wäßriger Lösung beträgt 9300 mPa·s.

### Beispiel 2

70 g luftrockene Hydroxyethylcellulose mit einem molaren Substitutionsgrad von 2,4 und einer Viskosität von 5600 mPa·s in 2 %-iger wäßriger Lösung werden in 371 g 95 %-igem t-Butanol suspendiert. Man überführt die Suspension in einen 2 l-Autoklaven, inertisiert durch Evakuieren und Überlagern mit Stickstoff und gibt bei Rühren eine Lösung von 2 g Natronlauge in 26,2 g Wasser zu. Nachdem 30 min bei Raumtemperatur gerührt worden ist, werden 5,9 g Alkylenoxid der Formel (2) zugesetzt. Man setzt 6 h bei 90 °C um, kühlt ab, neutralisiert mit 3,3 g Essigsäure und arbeitet wie in Beispiel 1 auf.

Das Hydroxyethylcellulosederivat hat einen Fluorgehalt von 0,29 % und eine Viskosität in 2 %-iger wäßriger Lösung von 3800 mPa·s.

### Beispiel 3

Nach gleicher Arbeitsweise wie in Beispiel 2 wird anstelle des Alkylenoxides der Formel (2) mit 8,8 g des Alkylenoxids der Formel (3) umgesetzt. Das resultierende Hydroxyethylcellulosederivat hat einen Fluorgehalt von 0,16 % und eine Viskosität in 2 %-iger wäßriger Lösung von 2400 mPa·s.

### Beispiel 4

Nach gleicher Arbeitsweise wie in Beispiel 2 wird mit 3,1 g Alkylenoxid der Formel (2) in 371 g 77 %-igem Isopropanol umgesetzt. Das Hydroxyethylcellulosederivat hat einen Fluorgehalt von 0,35 % und eine Viskosität in 2 %-iger wäßriger Lösung von 5100 mPa·s.

### Beispiel 5

60 g lufttrockener Fichtenzellstoff werden in 500 g t-Butanol, 31 g Aceton und 50 g Wasser suspendiert. Man überführt die Suspension in einen 2 l-Autoklaven, inertisiert durch Evakuieren und Überlagern mit Stickstoff, gibt eine Lösung von 23,8 g Natronlauge in 46,6 g Wasser zu, rührt 30 min bei Raumtemperatur, versetzt mit 34,8 ml Ethylenoxid und läßt 45 min bei 55 °C reagieren. Anschließend wird eine weitere Portion von 52,2 ml Ethylenoxid sowie 4,1 g Bromid der Formel (4) zugegeben und 45 min bei 70 °C sowie 2,5 h bei 95 °C umgesetzt. Man läßt auf 70 °C abkühlen, gibt 14,1 g Monochloressigsäure gelöst in 34,5 g t-Butanol zu und läßt noch 1 h bei 70 °C reagieren. Nach dem Abkühlen wird mit 29 g 65 %-iger Salpetersäure und 1,7 g Essigsaure neutralisiert und wie in Beispiel 1 aufgearbeitet.

Das Hydroxyethylcarboxymethylcellulosederivat hat einen molaren Substitutionsgrad an Hydroxyethyl von 2,7 und einen Durchschnittssubstitutionsgrad an Carboxymethyl von 0,25. Sein Fluorgehalt beträgt 0,32 %. Die Viskosität der 2 %-igen wäßrigen Lösung liegt bei 20100 mPa·s.

### Beispiel 6

70 g lufttrockene Methylhydroxyethylcellulose mit einem Durchschnittssubstitutionsgrad von 1,4 an Methyl und einem molaren Substitutionsgrad von 0,14 an Hydroxyethyl und einer Viskosität von 2600 mPa·s in 2 %-iger wäßriger Lösung werden in 300 g 95 %-igem t-Butanol suspendiert. Man überführt die Suspension in einen 2 l-Autoklaven, inertisiert durch Evakuieren und Überlagern mit Stickstoff, tropft beim Rühren eine Lösung von 2,4 g Natronlauge in 38,8 g Wasser zu, läßt 30 min bei Raumtemperatur rühren und versetzt mit einer Lösung von 1,5 g Perfluorolefin der Formel (5) in 20 g t-Butanol. Anschließend wird 6 h bei 90 °C umgesetzt. Man läßt abkühlen, neutralisiert mit 4 g Essigsäure und arbeitet wie in Beispiel 1 auf.

Das Methylhydroxyethylcellulosederivat hat einen Fluorgehalt von 0,6 % und eine Viskosität in 2 %-iger wäßriger Lösung von 1870 mPa·s.

### Beispiel 7

Analog dem Beispiel 6 wird mit 2,6 g Perfluorolefin der Formel (6) umgesetzt. Das erhaltene Methylhydroxyethylcellulosederivat hat einen Fluorgehalt von 0,4 % und eine Viskosität in 2 %-iger wäßriger Lösung von 2100 mPa·s.

Die in den Beispielen 2 und 3 hergestellten Cellulosederivate werden in einer Dispersionsinnenfarbe als Verdicker eingearbeitet und ihre Wirkung mit den Verdickern des Standes der Technik verglichen.

Die untersuchten Dispersionsfarben enthalten den folgenden Stammansatz:

| Gew.-Teile | Komponenten |
|---|---|
| 123 | Wasser |
| 16 | Konservierungsmittel |
| 10 | Polyphosphat (10 %ig ®Calgon N) Herst. Hoechst, DE |
| 5 | Dispergiermittel (®Additol XW 330) Herst. Hoechst, DE |
| 1 | Entschäumer (®Agitan 280) Herst. Münzing-Chemie, DE |
| 100 | Titandioxid-Pigment |
| 375 | Füllstoff (CaCO₃, ®Durcal 5) Herst. Omnya GmbH, DE |
| 50 | Füllstoff (CaCO₃, ®Socal P II) Herst. Solvay GmbH, DE |
| 25 | China Clay (Kaolin) |
| 100 | Styrol-Acrylat-Copolymerdispersion (®Mowilith DM 60) Herst. Hoechst, DE |
| 1 | Natronlauge (10 %ig) |
| 7̅9̅2̅ | |

### Herstellung der Fertigfarbe:

| Gew.-Teile | Komponenten |
|---|---|
| 792 | Stammansatz |
| 8 | Filmbildner (®Texanol), Herst. Eastman, USA |
| 200 | Verdicker (Verdicker als 2 bis 4 %ige wäßrige Lösung) |
| 1̅0̅0̅0̅ | |

- Probe A:: Verdicker Cellulosederivat des Beispiels 2
- Probe B:: Verdicker Cellulosederivat des Beispiels 3

Zum Vergleich mit den Cellulosederivaten der Erfindung werden folgende Verdicker nach dem Stand der Technik eingesetzt. Alle Viskositätswerte (mPa·s) der Verdicker wurden in 2 %iger wäßriger Lösung bei 20 °C gemäß DIN 53 015 im Höppler-Kugelfallviskosimeter ermittelt.
- Probe C:: Verdicker Hydroxyethylcellulose Viskosität 6000 mPa·s/2 %ig
- Probe D:: Verdicker Methylhydroxyethylcellulose, Viskosität 6000 mPa·s/2 %ig
- Probe E:: Verdicker Hydroxyethylcellulose mit langkettigem Alkylrest, Viskosität 6000 mPa·s/2 %ig
- Probe F:: Verdicker Ethylhydroxyethylcellulose, hydrophob modifiziert, Viskosität 6000 mPa·s/2 %ig
Direkt nach der Fertigstellung der Farbe sowie nach Konditionierung bei 20 °C/50 % Feuchte/1 Tag wurden die Farbenviskositäten mit dem Brookfield-Rheometer (Spindel 6 mit 10 und 100 UpM, 20°C) gemessen.

Aus den gemessenen Viskositätswerten ergibt sich eine geringere Nachverdickung der erfindungsgemäßen Produkte (Probe A und B) im Vergleich zu üblichen Celluloseethern und den hydrophob modifizierten Celluloseethern (Probe E und F).

| Probe | Brookfield-Viskosität (Sp. 6/10 UpM) direkt nach Herst/nach Lagerung · (1 Tag) | | Veränderung (%) |
|---|---|---|---|
| A | 26 500 mPa·s | 29 000 mPa·s | + 9,4 |
| B | 30 600 | 36 200 | + 18,3 |
| C | 24 500 | 36 000 | + 46,9 |
| D | 19 000 | 25 000 | + 31,6 |
| E | 24 000 | 40 500 | + 77,9 |
| F | 14 000 | 36 000 | + 157,1 |

Zur Beurteilung der Ergiebigkeit der Verdicker werden konditionierte Dispersionsfarben mit der Referenz-Viskosität von 25 000 mPa·s (Brookfield-Rheometer, Spindel 6, 10 UpM, 1 min Meßzeit, 20°C) herangezogen.

Die erfindungsgemäßen Produkte zeigen im Vergleich eine höhere Ergiebigkeit. So werden folgende Einsatzmengen (Gew.-% bezogen auf das Gesamtgewicht der Farbe) zur Einstellung der Referenzkonsistenz benötigt:

| | |
|---|---|
| Probe A | 0,44 - 0,50 Gew.-% |
| Probe B | 0,44 - 0,50 Gew.-% |
| Probe C | 0,55 - 0,60 Gew.-% |
| Probe D | 0,58 - 0,63 Gew.-% |
| Probe E | 0,50 - 0,55 Gew.-% |
| Probe F | 0,52 - 0,57 Gew.-% |

Zur quantitativen Beurteilung des Spritzverhaltens einer Dispersionsfarbe wird nachstehender Test durchgeführt, der die Applikation der Farbe mit der Farbenrolle nachstellt:

Eine konditionierte Farbrolle wird mit einer definierten Menge (35 ml) Dispersionfarbe beladen und mehrmals mit motorischen Hubbewegungen auf einem praxisüblichen Farbenabstreifgitter abgerollt. Der Anpreßdruck der Farbenrolle ist konstant gehalten. Am Boden einer Schale, die als Stütze für das rechteckige Gitter dient, befindet sich ein schwarzer Karton. Die auf ihm auftreffenden Farbspritzer werden bzgl. Anzahl und Flächenabdeckung mit einem photo-elektronischen Bildanalysator quantifiziert.

### Ergebnisse (Farbenspritztest)

| Probe | Mit Farbspritzern bedeckte Fläche (%) |
|---|---|
| A | 0,4 - 0,5 |
| B | 0,4 - 0,5 |
| C | 1,7 - 2,1 |
| D | 0,7 - 0,9 |
| E | 0,4 - 0,5 |
| F | 0,4 - 0,5 |

Bei der Verarbeitung der erfindungsgemäßen Cellulosederivate in Dispersionsfarben zeigen diese gegenüber mit langen Alkylketten hydrophobierten Cellulosederivaten eine vergleichbare Reduzierung der Spritzneigung. Sie führen jedoch zu einer geringeren Nachverdickung der Farbe bei Lagerung und besitzen hinsichtlich der verdickenden Wirkung in der Farbe eine höhere Ergiebigkeit und damit erhöhte Wirksamkeit. Gegenüber den Celluloseethern ohne hydrophobe Modifizierung wird mit den erfindungsgemäßen Cellulosederivaten ein deutlich reduziertes Spritzverhalten der Dispersionsfarbe erzielt. Zum Erreichen der gewünschten Farbenkonsistenz ist auch gegenüber diesen Verbindungen eine geringere Menge an Verdicker erforderlich.

Die Cellulosederivate sind auch als Schutzkolloide für die Suspensions-/Emulsionspolymerisation geeignet und können auch als oberflächenaktive Verbindungen verwendet werden.

## Patentansprüche (Patentansprüche für folgende(n) Vertragsstaat(en): DE, GB, FR, IT, NL, BE, LU)

1. Wasserlöslicher Celluloseether mit mindestens einem über eine Etherbindung gebundenen nichtfluorhaltigen Rest aus der Gruppe Hydroxyethyl, Hydroxypropyl, Methyl, Ethyl und Carboxymethyl und mit einem hydrophoben Substituenten, der über eine Ether- oder Urethanbindung mit dem Cellulosemolekül verknüpft ist und der einen fluorhaltigen Alkylrest mit 3 bis 24, insbesondere 5 bis 18 C-Atomen umfaßt, wobei der Fluorgehalt 0,05 bis 5, insbesondere 0,1 bis 1 Gew.-%, bezogen auf das Trockengewicht des Celluloseethers, beträgt.

2. Celluloseether nach Anspruch 1, dadurch gekennzeichnet, daß der Durchschnittspolymerisationsgrad des Celluloseethers 50 bis 2000, insbesondere 400 bis 1200 beträgt.

3. Celluloseether nach Anspruch 1 oder 2, dadurch gekennzeichnet, daß er zumindest zu 0,5 Gew.-% in Wasser löslich ist (20°C).

4. Celluloseether nach einem der Ansprüche 1 bis 3, dadurch gekennzeichnet, daß der mit dem Celluloseether verknüpfte hydrophobe Substituent eine der Formeln hat
(a) R-CH(OH)-CH₂-O-Celluloseether
(b) R¹-CHF-CFR-O-Celluloseether
(c) R-CHF-CFR¹-O-Celluloseether
(d) R-O-Celluloseether
(e) R-O-CH₂-CH(OH)-CH₂-O-Celluloseether
(f) Y-CHX-CX₂-O-Celluloseether
(g) Y-CHX-CXR²-O-Celluloseether
(l) R-NH-CO-O-Celluloseether
hat, in denen R und R¹ ein (C₁-C₂₂)-Alkylrest und R² entweder H oder ein (C₁-C₂₂)-Alkylrest ist, wobei die Gesamtzahl der C-Atome der Alkylgruppen der Formel (b) und (c) 3 bis 24 beträgt,
X Fluor und/oder Wasserstoff und
Y -CN oder -CO₂R³ ist, wobei R³ ein (C₁-C₂₂)-Alkylrest ist,
und daß in den Formeln (a) bis (g) mindestens 3 C-Atome, in der Formel (l) mindestens 2 C-Atome, der Substituenten mit Fluoratomen verbunden sind.

5. Dispersionsfarbe mit einem Zusatz an hydrophob modifizierten Celluloseethern zur Verbesserung des Spritzverhaltens der Farbe, dadurch gekennzeichnet, daß der Celluloseether mit mindestens einem über eine Etherbindung gebundenen nichtfluorhaltigen Rest aus der Gruppe Hydroxyethyl, Hydroxypropyl, Methyl, Ethyl und Carboxymethyl und mit einem hydrophoben Substituenten, der einen fluorhaltigen Alkylrest mit 3 bis 24, insbesondere 5 bis 18 C-Atomen umfaßt, wobei der Fluorgehalt 0,05 bis 5, insbesondere 0,1 bis 1 Gew.-%, bezogen auf das Trockengewicht des Celluloseethers, beträgt.

6. Dispersionsfarbe nach Anspruch 5, dadurch gekennzeichnet, daß das Cellulosederivat in einer Menge von kleiner als 0,5 Gew.-% bezogen auf das Gewicht der Dispersionsfarbe, vorhanden ist.

7. Verfahren zur Herstellung von löslichen Celluloseethern nach einem der Ansprüche 1 bis 4, dadurch gekennzeichnet, daß ein nicht-fluorhaltiger Celluloseether aus der Gruppe Hydroxyethyl-, Hydroxypropyl-, Methyl-, Ethyl- oder Carboxymethylcellulose oder eine ihrer Mischether in Gegenwart von Basen mit fluorhaltigen Reagenzien, gegebenenfalls in einem inerten Verdünnungsmittel, umgesetzt wird.

8. Verfahren zur Herstellung von wasserlöslichen Celluloseethern nach Anspruch 7, dadurch gekennzeichnet, daß als Basen wäßrige Lösungen von Alkalimetallhydroxiden, Erdalkalimetallhydroxiden, quartären Ammoniumhydroxiden oder tertiären Aminen verwendet werden.

9. Verfahren zur Herstellung von wasserlöslichen Celluloseethern nach einem der Ansprüche 7 oder 8, dadurch gekennzeichnet, daß als fluorhaltige Reagenzien Alkylenoxide mit einem Fluoralkylrest, Fluorolefine, fluorhaltige Halogenalkane, fluorhaltige Halogenhydrine, Glycolether von Fluoralkoholen sowie fluorhaltige Acrylnitril- und Acrylesterderivate verwendet werden.

10. Verfahren zur Herstellung von wasserlöslichen Celluloseethern nach einem der Ansprüche 7 bis 9, dadurch gekennzeichnet, daß als inertes Verdünnungsmittel niedere Alkohole, Ketone, aromatische Kohlenwasserstoffe, aliphatische Kohlenwasserstoffe oder das fluorhaltige Reagenz selbst verwendet werden.

11. Verfahren zur Herstellung von wasserlöslichen Celluloseethern nach einem der Ansprüche 7 bis 10, dadurch gekennzeichnet, daß die Umsetzung bei einer Reaktionstemperatur von 20 bis 100°C erfolgt.

12. Verwendung von Cellulosederivate nach einem der Ansprüche 1 bis 4 als Verdicker in Dispersionsfarben.

## Patentansprüche (Patentansprüche für folgende(n) Vertragsstaat(en): ES)

1. Dispersionsfarbe enthaltend Wasserlösliche Celluloseether mit mindestens einem über eine Etherbindung gebundenen nichtfluorhaltigen Rest aus der Gruppe Hydroxyethyl, Hydroxypropyl, Methyl, Ethyl und Carboxymethyl und mit einem hydrophoben Substituenten, der einen fluorhaltigen Alkylrest mit 3 bis 24, insbesondere 5 bis 18 C-Atomen umfaßt, wobei der 0,05 bis 5, insbesondere 0,1 bis 1 Gew.-% bezogen auf das Trockengewicht des Celluloseethers, beträgt.

2. Dispersionsfarben enthaltend Celluloseether nach Anspruch 1, dadurch gekennzeichnet, daß der Durchschnittspolymerisationsgrad des Celluloseethers 50 bis 2000, insbesondere 400 bis 1200 beträgt.

3. Dispersionsfarben enthaltend Celluloseether nach Anspruch 1 oder 2, dadurch gekennzeichnet, daß er zumindest zu 0,5 Gew.-% in Wasser löslich ist (20 °C).

4. Dispersionsfarben enthaltend Celluloseether nach einem der Ansprüche 1 bis 3, dadurch gekennzeichnet, daß der hydrophobe Substituent über eine Ether-, Ester- oder Urethanbindung mit dem Cellulosemolekül verknüpft ist.

5. Dispersionsfarben enthaltend Celluloseether nach Anspruch 4, dadurch gekennzeichnet, daß der mit dem Celluloseether verknüpfte hydrophobe Substituent eine der Formeln hat
(a) R - CH(OH) - CH₂ - O - Celluloseether
(b) R¹ - CHF -CFR - O - Celluloseether
(c) R - CHF - CFR¹ - O - Celluloseether
(d) R - O - Celluloseether
(e) R - O - CH₂ - CH(OH) - CH₂ - O - Celluloseether
(f) Y - CHX - CX₂ - O - Celluloseether
(g) Y - CHX - CXR² - O - Celluloseether
(h) R-CF₂-CF₂-O(CFR-CF₂)ₙ-CFR-CO-O-Celluloseether
(i) R - CF₂ - CO - O - Celluloseether
(j) HCRR² - CO - O - Celluloseether
(k) R - CO - O - Celluloseether
(l) R - NH -CO - O - Celluloseether
hat, in denen R und R¹ ein (C₁-C₂₂)-Alkylrest und R² entweder H oder ein (C₁-C₂₂)-Alkylrest ist, wobei die Gesamtzahl der C-Atome der Alkylgruppen der Formel (b), (c) und (j) 3 bis 24 beträgt,
X Fluor und/oder Wasserstoff und
Y -CN oder -CO₂R³ ist, wobei R³ ein (C₁-C₂₂)-Alkylrest ist,
und daß in den Formeln (a) bis (g) mindestens 3 C-Atome, in den Formeln (h) bis (l) mindestens 2 C-Atome, der Substituenten mit Fluoratomen verbunden sind.

6. Dispersionsfarbe mit einem Zusatz an hydrophob modifizierten Cellulosethern zur Verbesserung des Spritzverhaltens der Farbe, dadurch gekennzeichnet, daß der Celluloseether eines oder mehrere der in einem der Ansprüche 1 bis 5 genannten Cellulosederivate umfaßt.

7. Dispersionsfarbe nach Anspruch 6, dadurch gekennzeichnet, daß das Cellulosederivat in einer Menge von kleiner als 0,5 Gew.-% bezogen auf das Gewicht der Dispersionsfarbe, vorhanden ist.

8. Verfahren zur Herstellung von wasserlöslichen Celluloseethern mit mindestens einem über eine Etherbindung gebundenen nichtfluorhaltigen Rest aus der Gruppe Hydroxyethyl, Hydroxypropyl, Methyl, Ethyl und Carboxymethyl und mit einem hydrophoben Substituenten, der über eine Ether- oder Urethanbindung mit dem Celulosemolekül verknüpft ist und der einen fluorhaltigen Alkylrest mit 3 bis 24, insbesondere 5 bis 18 C-Atomen umfaßt, wobei der Fluorgehalt 0,05 bis 5, insbesondere 0,1 bis 1 Gew.-%, bezogen auf das Trockengewicht des Celluloseethers, beträgt, dadurch gekennzeichnet, daß ein nicht-fluorhaltiger Celluloseether aus der Gruppe Hydroxyethyl-, Hydroxypropyl-, Methyl-, Ethyl- oder Carboxymethylcellulose oder eine ihrer Mischether in Gegenwart von Basen mit fluorhaltigen Reagenzien gegebenenfalls in einem inerten Verdünnungsmittel umgesetzt wird.

9. Verfahren zur Herstellung von wasserlöslichen Celluloseethern nach Anspruch 8, dadurch gekennzeichnet, daß als Basen wäßrige Lösungen von Alkalimetallhydroxiden, Erdalkalimetallhydroxiden, quartären Ammoniumhydroxiden oder tertiären Aminen verwendet werden.

10. Verfahren zur Herstellung von wasserlöslichen Celluloseethern nach einem der Ansprüche 8 oder 9, dadurch gekennzeichnet, daß als fluorhaltige Reagenzien Alkylenoxide mit einem Fluoralkylrest, Fluorolefine, fluorhaltige Halogenalkane, fluorhaltige Halogenhydrine, Glycolether von Fluoralkoholen sowie fluorhaltige Acrylnitril- und Acrylesterderivate verwendet werden.

11. Verfahren zur Herstellung von wasserlöslichen Celluloseethern nach einem der Ansprüche 8 bis 10, dadurch gekennzeichnet, daß als inertes Verdünnungsmittel niedere Alkohole, Ketone, aromatische Kohlenwasserstoffe, aliphatische Kohlenwasserstoffe oder das fluorhaltige Reagenz selbst verwendet werden.

12. Verfahren zur Herstellung von wasserlöslichen Celluloseethern nach einem der Ansprüche 8 bis 11, dadurch gekennzeichnet, daß die Umsetzung bei einer Reaktionstemperatur von 20 bis 100 °C erfolgt.

## Claims (Claims for the following Contracting State(s): DE, GB, FR, IT, NL, BE, LU)

1. A water-soluble cellulose ether containing at least one fluorine-free radical attached via an ether linkage and selected from the group consisting of hydroxyethyl, hydroxypropyl, methyl, ethyl and carboxymethyl, and a hydrophobic substituent, attached to the cellulose molecule via an ether or urethane linkage, which comprises a fluorine-containing alkyl radical containing 3 to 24, in particular 5 to 18, carbon atoms, the fluorine content being 0.05 to 5, in particular 0.1 to 1% by weight, based on the dry weight of the cellulose ether.

2. A cellulose ether as claimed in claim 1, wherein the average degree of polymerization of the cellulose ether is 50 to 2000, in particular 400 to 1200.

3. A cellulose ether as claimed in claim 1 or 2, the solubility of which in water being at least 0.5% by weight (20°C).

4. A cellulose ether as claimed in any of claims 1 to 3, wherein the hydrophobic substituent attached to the cellulose ether has one of the formulae
(a) R-CH(OH)-CH₂-O-cellulose ether
(b) R¹-CHF-CFR-O-cellulose ether
(c) R-CHF-CFR¹-O-cellulose ether
(d) R-O-cellulose ether
(e) R-O-CH₂-CH(OH)-CH₂-O-cellulose ether
(f) Y-CHX-CX₂-O-cellulose ether
(g) Y-CHX-CXR²-O-cellulose ether
(l) R-NH-CO-O-cellulose ether
in which R and R¹ are each a (C₁-C₂₂)-alkyl radical and R² is either H or a (C₁-C₂₂)-alkyl radical, the total number of the carbon atoms of the alkyl groups of the formulae (b) and (c) being 3 to 24,
X is fluorine and/or hydrogen and
Y is -CN or -CO₂R³, R³ being a (C₁-C₂₂)-alkyl radical,
and in the formulae (a) to (g) at least 3 carbon atoms, in the formula (l) at least 2 carbon atoms, of the substituents are linked with fluorine atoms.

5. An emulsion paint containing hydrophobically modified cellulose ethers added for the enhancement of the splashing characteristics of the paint, wherein the cellulose ether used is one containing at least one fluorine-free radical attached via an ether linkage and selected from the group consisting of hydroxyethyl, hydroxypropyl, methyl, ethyl and carboxymethyl, and a hydrophobic substituent which comprises a fluorine-containing alkyl radical containing 3 to 24, in particular 5 to 18, carbon atoms, the fluorine content being 0.05 to 5, in particular 0.1 to 1% by weight, based on the dry weight of the cellulose ether.

6. An emulsion paint as claimed in claim 5, wherein the cellulose derivative is present in an amount smaller than 0.5% by weight based on the weight of the dispersion paint.

7. A process for the preparation of soluble cellulose ethers as claimed in any of claims 1 to 4, wherein a fluorine-free cellulose ether selected from the group consisting of hydroxyethyl-, hydroxypropyl-, methyl-, ethyl-or carboxymethylcellulose or one of their mixed ethers is reacted in the presence of bases with fluorine-containing reagents, if required in an inert diluent.

8. The process for the preparation of water-soluble cellulose ethers as claimed in claim 7, wherein aqueous solutions of alkali metal hydroxides, alkaline earth metal hydroxides, quaternary ammonium hydroxides or tertiary amines are used as the bases.

9. The process for the preparation of water-soluble cellulose ethers as claimed in either of claims 7 and 8, wherein alkylene oxides containing a fluoroalkyl radical, fluoroolefins, fluorine-containing haloalkanes, fluorine-containing halohydrins, glycol ethers of fluoroalcohols and fluorine-containing acrylonitrile and acrylic ester derivatives are used as the fluorine-containing reagents.

10. The process for the preparation of water-soluble cellulose ethers as claimed in any of claims 7 to 9, wherein lower alcohols, ketones, aromatic hydrocarbons, aliphatic hydrocarbons or the fluorine-containing reagent itself are used as the inert diluent.

11. The process for the preparation of water-soluble cellulose ethers as claimed in any of claims 7 to 10, wherein the reaction is carried out at a reaction temperature of 20 to 100°C.

12. Use of cellulose derivatives as claimed in any of claims 1 to 4 as thickeners in emulsion paints.

## Claims (Claims for the following Contracting State(s): ES)

1. An emulsion paint containing a water-soluble cellulose ether containing at least one fluorine-free radical attached via an ether linkage and selected from the group consisting of hydroxyethyl, hydroxypropyl, methyl, ethyl and carboxymethyl, and a hydrophobic substituent which comprises a fluorine-containing alkyl radical containing 3 to 24, in particular 5 to 18, carbon atoms, the fluorine content being 0.05 to 5, in particular 0.1 to 1% by weight, based on the dry weight of the cellulose ether.

2. An emulsion paint containing a cellulose ether as claimed in claim 1, wherein the average degree of polymerization of the cellulose ether is 50 to 2000, in particular 400 to 1200.

3. An emulsion paint containing a cellulose ether as claimed in claim 1 or 2, the solubility of which in water being at least 0.5% by weight (20°C).

4. An emulsion paint containing a cellulose ether as claimed in any of claims 1 to 3, wherein the hydrophobic substitutent is attached to the cellulose molecule via an ether, ester or urethane link.

5. An emulsion paint containing a cellulose ether as claimed in claim 4, wherein the hydrophobic substituent attached to the cellulose ether has one of the formulae
(a) R - CH(OH) - CH₂ - O - cellulose ether
(b) R¹ - CHF - CFR - O - cellulose ether
(c) R - CHF - CFR¹ - O - cellulose ether
(d) R - O - cellulose ether
(e) R - O - CH₂ - CH(OH) - CH₂ - O - cellulose ether
(f) Y - CHX - CX₂ - O - cellulose ether
(g) Y - CHX - CXR² - O - cellulose ether
(h) R-CF₂-CF₂-O(CFR-CF₂)ₙ-CFR-CO-O-cellulose ether
(i) R - CF₂ - CO - O cellulose ether
(j) HCRR² - CO - O - cellulose ether
(k) R - CO - O - cellulose ether
(l) R - NH - CO - O - cellulose ether
in which R and R¹ are each a (C₁-C₂₂)-alkyl radical and R² is either H or a (C₁-C₂₂)-alkyl radical, the total number of the carbon atoms of the alkyl groups of the formulae (b), (c) and (j) being 3 to 24,
X is fluorine and/or hydrogen and
Y is -CN or -CO₂R³, R³ being a (C₁-C₂₂)-alkyl radical,
and in the formulae (a) to (g) at least 3 carbon atoms, in the formulae (h) to (l) at least 2 carbon atoms, of the substituents are linked with fluorine atoms.

6. An emulsion paint containing hydrophobically modified cellulose ethers added for the enhancement of the splashing characteristics of the paint, wherein the cellulose ether comprises one or more of the cellulose derivatives referred to in any of claims 1 to 5.

7. An emulsion paint as claimed in claim 6, wherein the cellulose derivative is present in an amount smaller than 0.5% by weight based on the weight of the dispersion paint.

8. A process for the preparation of water-soluble cellulose ethers containing at least one fluorine-free radical attached via an ether linkage and selected from the group consisting of hydroxyethyl, hydroxypropyl, methyl, ethyl and carboxymethyl, and a hydrophobic substituent, attached to the cellulose molecule via an ether or orethane linkage, which comprises a fluorine-containing alkyl radical containing 3 to 24, in particular 5 to 18, carbon atoms, the fluorine content being 0.05 to 5, in particular 0.1 to 1% by weight, based on the dry weight of the cellulose ether, wherein a fluorine-free cellulose ether selected from the group consisting of hydroxyethyl-, hydroxypropyl-, methyl-, ethyl- or carboxymethylcellulose or one of their mixed ethers is reacted in the presence of bases with fluorine-containing reagents, if required in an inert diluent.

9. The process for the preparation of water-soluble cellulose ethers as claimed in claim 8, wherein aqueous solutions of alkali metal hydroxides, alkaline earth metal hydroxides, quaternary ammonium hydroxides or tertiary amines are used as the bases.

10. The process for the preparation of water-soluble cellulose ethers as claimed in either of claims 8 and 9, wherein alkylene oxides containing a fluoroalkyl radical, fluoroolefins, fluorine-containing haloalkanes, fluorine-containing halohydrins, glycol ethers of fluoroalcohols and fluorine-containing acrylonitrile and acrylic ester derivatives are used as the fluorine-containing reagents.

11. The process for the preparation of water-soluble cellulose ethers as claimed in any of claims 8 to 10, wherein lower alcohols, ketones, aromatic hydrocarbons, aliphatic hydrocarbons or the fluorine-containing reagent itself are used as the inert diluent.

12. The process for the preparation of water-soluble cellulose ethers as claimed in any of claims 8 to 11, wherein the reaction is carried out at a reaction temperature of 20 to 100°C.

## Revendications (Revendications pour l'(les) Etat(s) contractant(s) suivant(s): DE, GB, FR, IT, NL, BE, LU)

1. Ether de cellulose hydrosoluble avec au moins un radical non fluoré, lié par l'intermédiaire d'une liaison éther, pris dans le groupe comportant l'hydroxyéthyle, l'hydroxypropyle, le méthyle, l'éthyle ou le carboxyméthyle, et avec un substituant hydrophobe qui est lié à la molécule de cellulose par l'intermédiaire d'une liaison éther ou uréthanne, et qui compoprte un radical alkyle fluoré avec 3 à 24, plus particulièrement 5 à 18 atomes de carbone, où la teneur en fluor est de 0,05 à 5, plus particulièrement de 0,1 à 1 % en poids par rapport au poids à sec de l'éther de cellulose.

2. Ether de cellulose selon la revendication 1, caractérisé en ce que le degré moyen de polymérisation de l'éther de cellulose est de 50 à 2000, plus particulièrement de 400 à 1200.

3. Ether de cellulose selon la revendication 1 ou 2, caractérisé en ce qu'il est hydrosoluble au moins jusqu'à 0,5 % en poids (20 °C).

4. Ether de cellulose selon une des revendications 1 à 3, caractérisé en ce que le substituant hydrophobe lié à l'éther de cellulose répond à une des formules :
(a) R-CH(OH)-CH₂-O-éther de cellulose
(b) O-CHF-CFR-O-éther de cellulose
(c) O-CHF-CFR¹-O-éther de cellulose
(d) R-O-éther de cellulose
(e) R-O-CH₂-CH(OH)-CH₂-O-éther de cellulose
(f) Y-CHX-CX₂-O-éther de cellulose
(g) Y-CHX-CXR²-O-éther de cellulose
(l) R-NH-CO-O-éther de cellulose
dans lesquelles
R et R¹ représentent un radical alkyle en C₁-C₂₂ et R² est soit H soit un radical alkyle en C₁-C₂₂, où le nombre total des atomes de carbone des groupes alkyle de formule (b) et (c) est de 3 à 24.
X représente le fluor et/ou l'hydrogène et
Y -CN ou -CO₂R³, où R³ représente un radical alkyle en C₁-C₂₂, et que dans les formules (a) à (g) au moins 3 atomes de carbone, dans la formule (l) au moins 2 atomes de carbone des substituants sont reliés aux atomes de fluor.

5. Peinture-dispersion avec une addition en éthers modifiés hydrophobes pour l'amélioration de la consistance ("Spritzvernalten") de la peinture, caractérisé en ce que l'éther de cellulose comporte au moins un radical non fluoré, relié par l'intermédiaire d'une liaison éther, pris dans le groupe comportant l'hydroxyéthyle, l'hydroxypropyle, le méthyle, l'éthyle et le carboxyméthyle, et un substituant hydrophobe qui comporte un radical alkyle fluoré avec 3 à 24, plus particulièrement 5 à 18 atomes de carbone, où la teneur en fluor est de 0,05 à 5, plus particulièrement de 0,1 à 1 % en poids, par rapport au poids à sec de l'éther de cellulose.

6. Peinture-dispersion selon la revendication 5, caractérisé en ce que le dérivé de cellulose est présent en une quantité inférieure à 0,5 % en poids par rapport au poids de la peinture-dispersion.

7. Procédé pour la préparation des éthers de cellulose solubles selon une des revendications 1 à 4, caractérise en ce qu'on fait réagir un éther de cellulose non fluoré, pris dans le groupe des hydroxyéthyl-, hydroxypropyl-, méthyl-, éthyl- ou carboxyméthyl-cellulose ou un de leurs éthers mixtes, en présence de bases, avec des réactifs fluorés éventuellement dans un diluant inerte.

8. Procédé pour la préparation des éthers de cellulose hydrosolubles selon la revendication 7, caractérisé en ce qu'on utilise en tant que bases des solutions aqueuses d'hydroxydes de métaux alcalins, d'hydroxydes de métaux alcalino-terreux, d'hydroxydes d'ammonium quaternaire ou des amines tertiaires.

9. Procédé pour la préparation des éthers de cellulose hydrosolubles selon une des revendications 7 ou 8, caractérisé en ce qu'on utilise en tant que réactifs fluorés des oxydes d'alkylène avec un radical alkyle fluoré, des fluoroléfines, des halogéno-alcanes fluorés, des halogénohydrines fluorées, des éthers de glycol des alcools fluorés ainsi que des dérivés d'acrylonitrile et des esters acryliques fluorés.

10. Procédé pour la préparation des éthers de cellulose hydrosolubles selon une des revendications 7 à 9, caractérisé en ce qu'on utilise en tant qu'agents diluants inertes des alcools inférieurs, des cétones, des hydrocarbures aromatiques, des hydrocarbures aliphatiques ou le réactif fluoré lui-même.

11. Procédé pour la préparation des éthers de cellulose hydrosolubles selon une des revendications 7 à 10, caractérisé en ce qu'on effectue la réaction à une température de réaction de 20 à 100 °C.

12. Utilisation des dérivés de cellulose selon une des revendications 1 à 4 en tant qu'épaississants dans les peintures-dispersions.

## Revendications (Revendications pour l'(les) Etat(s) contractant(s) suivant(s): ES)

1. Peinture-dispersion contenant des éthers de cellulose hydrosolubles avec au moins un radical non fluoré, relié par l'intermédiaire d'une liaison éther, pris dans le groupe comportant l'hydroxyéthyle, l'hydroxypropyle, le méthyle, l'éthyle ou le carboxyméthyle, et avec un substituant hydrophobe, qui comporte un radical alkyle fluoré avec 3 à 24, plus particulièrement 5 à 18 atomes de carbone, où il représente de 0,05 à 5, plus particulièrement de 0,1 à 1 % en poids par rapport au poids à sec de l'éther de cellulose.

2. Peinture-dispersion contenant l'éther de cellulose selon la revendication 1, caractérisé en ce que le degré moyen de polymérisation de l'éther de cellulose est de 50 à 2000, plus particulièrement de 400 à 1200.

3. Peinture-dispersion contenant l'éther de cellulose selon la revendication 1 ou 2, caractérisé en ce qu'il est soluble dans l'eau jusqu'à au moins 0,5 % en poids (20 °C).

4. Peinture-dispersion contenant l'éther de cellulose selon une des revendications 1 à 3, caractérisé en ce que le substituant hydrophobe est relié à la molécule de cellulose par l'intermédiaire d'une liaison éther, ester ou uréthanne.

5. Peinture-dispersion contenant l'éther de cellulose selon la revendication 4, caractérisé en ce que le substituant hydrophobe, relié à l'éther de cellulose, répond à une des formules :
(a) R-CH(OH)-CH₂-O-éther de cellulose
(b) O-CHF-CFR-O-éther de cellulose
(c) O-CHF-CFR¹-O-éther de cellulose
(d) R-O-éther de cellulose
(e) R-O-CH₂-CH(OH)-CH₂-O-éther de cellulose
(f) Y-CHX-CX₂-O-éther de cellulose
(g) Y-CHX-CXR²-O-éther de cellulose
(l) -NH-CO-O-éther de cellulose
dans lesquelles
R et R¹ représentent un radical alkyle en C₁-C₂₂ et R² est soit H soit un radical alkyle en C₁-C₂₂, où le nombre total des atomes de carbone des groupes alkyle de formule (b) et (c) et (j) est de 3 à 24.
X représente le fluor et/ou l'hydrogène et
Y -CN ou -CO₂R³, où R³ représente un radical alkyle en C₁-C₂₂, et que dans les formules (a) à (g) au moins 3 atomes de carbone, dans la formule (h) à (l) au moins 2 atomes de carbone des substituants sont reliés aux atomes de fluor.

6. Peinture-dispersion avec une addition en éthers de cellulose modifiés hydrophobe pour améliorer la consistance ("Spritzverhalten") des peintures, caractérisé en ce que l'éther de cellulose comporte un ou plusieurs des dérivés de cellulose cités dans les revendications 1 à 5.

7. Peinture-dispersion selon la revendication 6, caractérisé en ce que le dérivé de cellulose est présent en une quantité inférieure à 0,5 % en poids par rapport au poids de la peinture-dispersion.

8. Procédé pour la préparation des éthers de cellulose hydrosolubles avec au moins un radical non fluoré, relié à la molécule de cellulose par l'intermédiaire d'une liaison éther, pris dans le groupe comprenant l'hydroxyéthyle, l'hydroxypropyle, le méthyle, l' éthyle ou le carboxyméthyle, et un substituant hydrophobe, relié à la molécule de cellulose par l'intermédiaire d'une liaison éther ou uréthanne, et comportant un radical alkyle fluoré avec 3 à 24, plus particulièrement 5 à 18 atomes de carbone, la teneur en fluor étant de 0,05 à 5, plus particulièrement de 0,1 à 1 % en poids, par rapport au poids à sec de l'éther de cellulose, caractérisé en ce qu'on fait réagir un éther de cellulose non fluoré pris dans le groupe comportant l'hydroxyéthyl-, l'hydroxypropyl-, le méthyl-, l'éthyl-ou la carboxyméthyl-cellulose ou un de ses éthers mixtes, en présence de bases avec des réactifs fluorés éventuellement dans un agent de dilution inerte.

9. Procédé pour la préparation des éthers de cellulose hydrosolubles selon la revendication 8, caractérisé en ce qu'on utilise en tant que bases des solutions aqueuses des hydroxydes de métaux alcalins, des hydroxydes de métaux alcalino-terreux, des hydroxydes d'ammonium quaternaire ou des amines tertiaires.

10. Procédé pour la préparation des éthers de cellulose hydrosolubles selon une des revendications 8 ou 9, caractérisé en ce qu'on utilise en tant que réactifs fluorés des oxydes d'alkylène avec un radical alkyle fluoré, des fluoroléfines, des halogéno-alcanes fluorés, des halogénohydrines fluorées, des éthers de glycol des alcools fluorés ainsi que des dérivés fluorés d'acrylonitrile et d'esters acryliques.

11. Procédé pour la préparation des éthers de cellulose hydrosolubles selon une des revendications 8 à 10, caractérisé en ce qu'on utilise en tant qu'agent diluant inerte des alcools inférieurs, des cétones, des hydrocarbures aromatiques, des hydrocarbures aliphatiques ou le réactif fluoré lui-même.

12. Procédé pour la préparation des éthers de cellulose hydrosolubles selon une des revendications 8 à 11, caractérisé en ce qu'on effectue la réaction à une température de réaction de 20 à 100 °C.
